# EUROPEAN PATENT SPECIFICATION

(11) **EP 4 127 484 B1**
(45) Date of publication and mention of the grant of the patent: **12.03.2025**
(21) Application number: 21714848.5
(22) Date of filing: 22.03.2021
(51) Int. Cl.: F04D 19/04, F04D 29/058, F16C 32/04, F04D 29/052

(54) **VACUUM PUMP**
VAKUUMPUMPE
POMPE À VIDE

(30) Priority: 23.03.2020 DE 202020101545 U
(43) Date of publication of application: 08.02.2023
(73) Proprietor: Leybold GmbH, 50968 Köln (DE)
(72) Inventor: KALISCH, Dirk Christian, 50968 Cologne (DE); HOELZER, Rainer, 50354 Hurth (DE)
(74) Representative: Totman, Clare Elizabeth
(86) International application number: PCT/EP2021/057235
(87) International publication number: WO 2021/191133

(56) References cited:
- EP-A1- 3 447 299
- EP-A2- 2 884 125
- US-A- 5 521 448
- US-A1- 2002 074 881

## Description

Vacuum pumps, such as for example turbomolecular vacuum pumps, have a rotor element. In the case of turbomolecular pumps for example, the rotor element is composed of several rotor disks. At least one stator element works together with the at least one rotor element. In the case of a turbomolecular pump, the stator has several stator disks, with the rotor disks and stator disks being arranged in alternation. The rotor element and the stator element could for example also be corresponding components of a Holweck pump, a Siegbahn pump etc. The rotor element and the stator element are arranged in a pump housing, with an inlet and an outlet. The rotor element is connected to a rotor shaft that bears at least one rotor element. If applicable, the rotor shaft and the at least one rotor element can also be designed as one piece. The rotor shaft is pivoted in the housing via two bearing elements and is usually driven by an electric motor in order to pump a gaseous medium from the inlet to the outlet.

For the correct operation of the vacuum pump, it is necessary to pre-stress the two bearing elements against one another. To this end, the practice is known of providing a screw element, for example an adjusting nut, in order to alter the axial position of the rotor shaft relative to the stator. Through this, the bearing elements are appropriately pre-stressed. This has the disadvantage, however, particularly in the case of high axial rigidity of the bearing elements, that even small changes in the screw position of the adjusting nut lead to a major change in the pre-stress force of the bearing elements.

Because of this, precise adjustment is difficult, and there is a risk of inaccurate adjustment, and furthermore adjustment that is not constant over the duration of operation.

EP 3 447 299 A1 discloses an adjusting ring having an adjusting portion for axially aligning a radially inner first bearing portion of a bearing of a vacuum pump in the direction of a longitudinal centre axis of the bearing relative to a radially outer second bearing portion of the bearing of the vacuum pump. A circumferential collar emerges from the adjustment portion of the adjustment ring, which has a radially outwardly extending radial collar portion.

EP 2 884 125 A2 discloses a vacuum pump with a stator, a rotor and a permanent magnet bearing for rotatable mounting of the rotor, wherein an adjusting device is provided for adjusting the resonance frequency of the permanent magnet bearing.

The task of the present invention is to create a vacuum pump in which highly precise setting of the bearing pre-stress can be effected in a simple manner.

According to the invention, the problem is solved by a vacuum pump according to claim 1.

The vacuum pump according to the invention, which in particular is a turbomolecular vacuum pump (for short: turbomolecular pump), has a rotor shaft that is borne in a pump housing. The rotor shaft bears at least one rotor element. In the case of the turbomolecular vacuum pump, the rotor shaft bears several rotor disks, which work together with stator disks arranged in alternation to the rotor disks. The stator disks are fixed in the housing. In the case of turbomolecular pumps in particular, the rotor shaft frequently additionally bears a Holweck pump, with the corresponding stator elements once again being connected to the housing. Furthermore, two bearing seat elements are connected to the pump housing, and in particular they are designed as one piece, so that in each case one bearing can be arranged between the two bearing seat elements and the rotor shaft. According to the invention, here at least one bearing has a stationary first magnet element that is connected to the bearing seat element, and a co-rotating second magnet element that is connected to the rotor shaft. Here, the first magnet element and the second magnet element repel one another magnetically, through which a bearing of the rotor shaft is produced. In particular, the magnet elements are permanent magnets, so that through the first magnet element and the second magnet element, a permanent magnet bearing or at least a radial permanent magnet bearing is created.

Here, the first magnet element and the second magnet element respectively have several magnet rings. The magnet rings of the first magnet element respectively surround the magnet rings of the second magnet element or vice versa, and are thus arranged radially to one another. In this respect, the statically arranged magnet rings, i.e. those connected to the bearing seat element, can encompass the magnet rings connected to the rotor shaft or vice versa, wherein in particular here the bearing seat element is designed as a journal that projects in a recess of the rotor shaft. In particular in the case of a repulsive design of the permanent magnet bearing, the magnet rings of the first magnet element and of the second magnet element are arranged such that the north poles of the magnet rings in each case face one another and accordingly the south poles of the magnet elements in each case face one another. Thus in the case of adjacent magnet rings of the first magnet element or of the second magnet element, in each case the same poles are arranged opposite one another.

According to the invention, a spring element is provided between at least two magnet rings of the first magnet element and/or of the second magnet element. Furthermore, the vacuum pump comprises an axial adjusting element for setting the bearing pre-stress, wherein through the adjusting element, the axial position of the first magnet element or of the second magnet element can be adjusted. Through the adjustment of the axial position of the first magnet element or of the second magnet element relative to one another, the pre-stress is set. At the same time, through the adjustment of the axial position, a compression or relief of the spring element between the at least two magnet rings is effected. Through the provision of the spring element, the adjusting element acts only directly on the first magnet ring whose position is changed, and only indirectly via the spring element on the second magnet ring of the same magnet element. Through this, the change in the bearing pre-stress that is produced via the axial adjusting element is reduced.

Whereas in the case of the known prior art, even a small change to the adjusting element produced a major change in the bearing pre-stress, since the respective entire first or second magnet element was displaced axially, according to the present invention only one magnet ring is displaced directly, through which only a small change in the bearing pre-stress is produced. It is thus possible, by providing the spring element, to achieve an exact and precise setting of the bearing pre-stress.

For preference, the second bearing is a rolling bearing. Here, in particular the bearing that is designed as a permanent magnet bearing is arranged on the suction-side end of the vacuum pump, whereas the rolling bearing is arranged at the delivery-side end, in the direction of the outlet. Alternatively, the two bearings are magnet bearings, in particular permanent magnet bearings.

For preference, the spring element is arranged between two magnet rings of the first magnet element. Thus the spring element is stationary and does not co-rotate, through which the requirement of radial rigidity of the spring element is reduced.

For preference, more than one spring element is provided, in particular between three consecutive magnet rings of the first magnet element and/or of the second magnet element. Through this, it is possible to achieve more precise setting of the bearing pre-stress, since the adjusting element acts directly only on the first magnet ring, acts indirectly on the second magnet ring via first spring element, and the change in axial position of the second magnet ring acts indirectly on the third magnet ring via the second spring element. Through this, the position of the individual magnet rings can be adjusted precisely, since a change to the adjusting element leads only to a small change in the axial position of the second magnet ring and of the third magnet ring.

For preference, the spring elements have the same spring constant. Through this, the construction is simplified. Alternatively, the spring elements have different spring constants, wherein the spring constant, in particular starting out from the adjusting element, increases. Through this, the situation is achieved that a change in the axial position of the third magnet ring leads to a lesser change in the axial position of the second magnet ring than is the case where the spring constants are the same.

For preference, the spring element is a disk spring, a spiral spring or an elastic material.

For preference, the axial adjusting element is a helical feed, in particular an adjusting nut. Thus a screw movement of the axial adjusting element is transferred to a change in axial position of the first magnet element and/or of the second magnet element. Here, the precision that can be achieved via the axial adjusting element is determined by the pitch of the screw thread. However, on account of the provision of the spring element according to the invention, a conventional pitch of the helical feed is sufficient in order to enable adequately precise setting of the bearing pre-stress, even in the case of high axial forces between the bearings.

For preference, the axial adjusting element acts on the first magnet element, so that the axial position of the first magnet element can be adjusted via the axial adjusting element. In particular, the first magnet element is the magnet element that has the at least one spring element.

The invention is explained in more detail below, on the basis of a preferred embodiment, with reference to the attached drawings.

The Figures show the following:
- Fig. 1 shows: a schematic sectional view of a preferred embodiment of a turbomolecular vacuum pump,
- Fig. 2 shows: a schematic view of an arrangement of the magnet rings, and
- Fig. 3 shows: a schematic view of a further arrangement of the magnet rings.

The vacuum pump according to the invention has a rotor shaft 10, which is pivoted in a pump housing 16 via a suction-side bearing 12 and a delivery-side bearing 14. The rotor shaft bears rotor elements, wherein in the case of the design example shown here, these are rotor disks 18 of a turbomolecular pump and a rotor 20 of a Holweck pump. Stator disks 22 work together with the rotor disks 18, and a stator ring 24 with a helical groove works together with the rotor of the Holweck pump. Furthermore, an electric motor 26 is connected to the rotor shaft for driving.

The suction-side bearing 12 is designed as a permanent magnet bearing and has a stationary first magnet element 29 as well as a co-rotating second magnet element 31. The first magnet element 29 has several stationary magnet rings 30, which are surrounded by outer co-rotating magnet rings 32 of the second magnet element 31. Here, the arrangement of the magnet rings 30, 32 is, in particular, repulsive. The outer magnet rings 32 of the second magnet element 31 are arranged in a recess 34 of the rotor shaft 10, so that a tubular part 36 of the rotor shaft is arranged between the outer magnet rings 32 and the rotor disks 8.

Projecting into the recess 34 is a journal 28, which bears the first magnet element 29 and connects to the housing 16.

The delivery-side bearing element 14 is designed as rolling bearings 62 which are arranged between a bearing seat element 52 and the rotor 10. The rotor 10 is pivoted by means of the first bearing 12 and the second bearing 14, wherein through the turning of the rotor 10 by the electric motor 26, a gaseous medium is transported from an inlet 33 to an outlet 35.

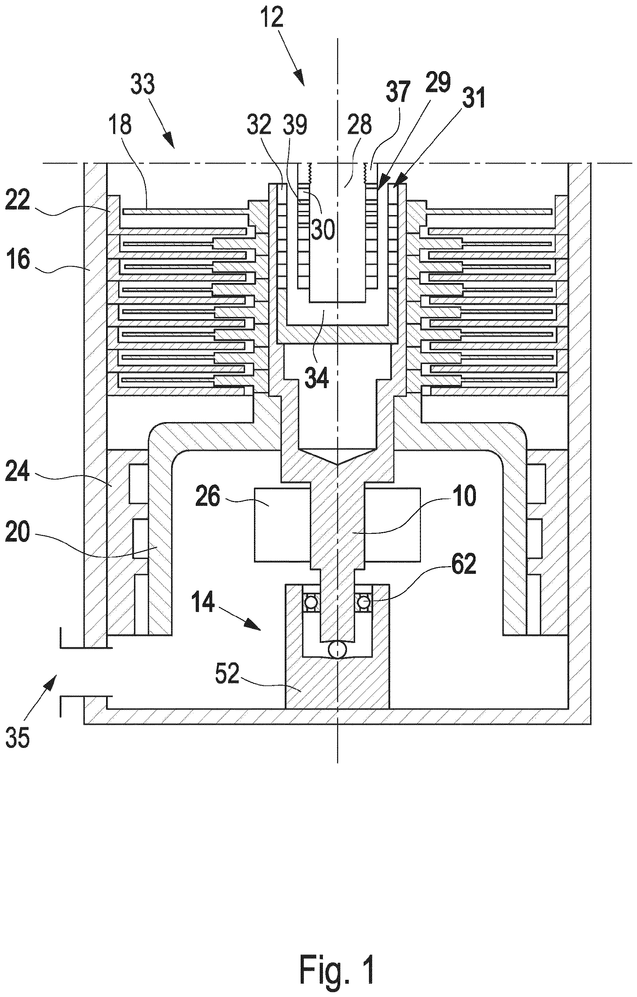

Furthermore, provided on the suction-side bearing 12 is an adjusting element 37, which is designed as an adjusting nut and which acts on the magnet rings 30 of the first magnet element 29. By turning the adjusting element 37, the axial position of at least part of the magnet rings 30 of the first magnet element 29 is changed. Through this change in axial position, the bearing pre-stress of the delivery-side bearing 14 and of the suction-side bearing 12 is changed. Here, a spring element 39 is arranged between the magnet rings 30 of the first magnet element 29. In the design example of Figure 1, three spring elements 39 are shown. The present invention is however not limited to the exact quantity of the spring elements 39 provided. In particular, just one spring element can be provided.

Through the provision of the spring element 34, the change in axial position produced by the adjusting element 37 which acts directly on the first magnet ring 30 of the first magnet element 29 starting out from the adjusting element 37, acted only indirectly on the second magnet ring 30 via the spring element 39. Thus the change in axial position, starting out from the first magnet ring 30 to the second magnet ring 30 of the first magnet element 29, is reduced. Thus the effect on the bearing pre-stress is reduced, since only the first magnet ring is directly displaced axially by the adjusting element 37.

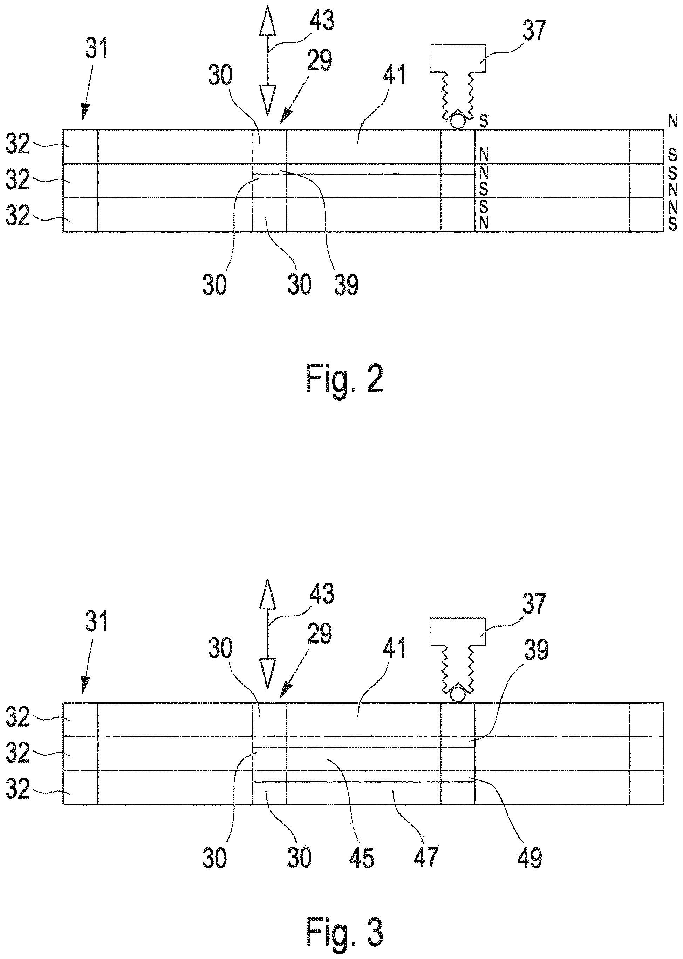

Figure 2 shows a detailed view. Here, the adjusting element 37 is shown schematically as an adjusting screw, wherein by turning the adjusting screw 7, the axial position of the first magnet ring 41 of the first magnet element 29 is altered, according to the arrow 43. Through the change in position, the spring element 39 is compressed, so that only the spring force produced by the change in position of the first magnet ring 41 acts indirectly via the spring element 39 on the other magnet rings of the first magnet element. Through this, the pre-stress force that is produced by the other magnet rings of the first magnet element 29 is reduced, so that precise setting of the bearing pre-stress can be achieved.

As is shown in Figure 2, here the magnet rings of the first magnet element and of the second magnet element are arranged to repel, so that the magnet rings of a magnet element 29, 31 face one another with the same pole. Furthermore, the magnet rings of the first magnet element 29 and of the second magnet element 31 repel one another, through which a magnet bearing is achieved.

Shown in Figure 3 is a further embodiment, wherein the same or similar elements are indicated with the same reference numbers. In contrast to the embodiment in Figure 2, the embodiment in Figure 3 has a first spring element 39 and a second spring element 41. A change in axial position of the first magnet ring 41 acts only indirectly on the second magnet ring 45 via the first spring element 39, and then via the second spring element 41 once again indirectly on the third magnet rings 47. A change in axial position of the first magnet ring 41 thus leads to only a minimal change in the axial position of the second magnet ring 45, and in particular of the third magnet ring 47, through which the effect on the bearing pre-stress is reduced. Precise setting of the bearing pre-stress is thus ensured. Here, the first spring element 39 and the second spring element 41 can have the same spring constant.

Alternatively, the spring constants of the first spring element 39 and of the second spring element 41 are different and, in particular starting from the adjusting element 37, they increase, so that a change in position of the first magnet ring 41, which is produced directly by the adjusting element 37, produces to a lesser extent a change in the axial position of the second magnet ring 45 or the third magnet ring 47. Through this, even finer setting of the bearing pre-stress is possible.

## Claims

1. Vacuum pump, in particular a turbomolecular vacuum pump, with
a rotor shaft (10) borne in a pump housing (16), this shaft bearing at least one rotor element (18, 20),
two bearings (12, 14), respectively arranged between a bearing seat element (28, 52) connected to the pump housing (16) and the rotor shaft (10),
wherein at least one bearing (12) has a first magnet element (29) connected to the bearing seat element (28), and a second magnet element (31) connected to the rotor shaft (10), wherein the first magnet element (29) and the second magnet element (31) repel one another magnetically to bear the rotor shaft (10),
wherein the first magnet element (29) and the second magnet element (31) respectively have several magnet rings (30, 32), **characterized in that** a spring element (39, 49) is provided between at least two magnet rings (30, 32) of the first magnet element (29) and/or of the second magnet element (31),
wherein the vacuum pump furthermore has an axial adjusting element (37) for setting the bearing pre-stress, wherein through the adjusting element (37), the axial position of the first magnet element (29) or of the second magnet element (31) can be adjusted, wherein the spring element (39, 49) is compressed or relieved when the axial position is adjusted.

2. Vacuum pump according to claim 1, **characterised in that** the second bearing (14) is a rolling bearing.

3. Vacuum pump according to claim 1 or 2, **characterised in that** the spring element (39, 49) is arranged between two magnet rings (30) of the first magnet element (29).

4. Vacuum pump according to one of the claims 1 to 3, **characterised in that** more than one spring element (39, 49) is provided, in particular between three consecutive magnet rings (30) of the first magnet element (29) and/or of the second magnet element (31).

5. Vacuum pump according to claim 4, **characterised in that** the spring elements (39, 49) have the same spring constant or at least two spring elements (39, 49) have different spring constant.

6. Vacuum pump according to one of the claims 1-5, **characterised in that** the axial adjusting element (37) is a helical feed.

7. Vacuum pump according to one of the claims 1-6, **characterised in that** the axial adjusting element (37) acts on the first magnet element (28).

## Patentansprüche

1. Vakuumpumpe, insbesondere eine Turbomolekularvakuumpumpe, mit:
einer Rotorwelle (10), getragen in einem Pumpengehäuse (16), wobei diese Welle mindestens ein Rotorelement (18, 20) trägt,
zwei Lagern (12, 14), jeweils angeordnet zwischen einem Lagersitzelement (28, 52), verbunden mit dem Pumpengehäuse (16) und der Rotorwelle (10),
wobei mindestens ein Lager (12) ein mit dem Lagersitzelement (28) verbundenes erstes Magnetelement (29) und ein mit der Rotorwelle (10) verbundenes zweites Magnetelement (31) aufweist, wobei das erste Magnetelement (29) und das zweite Magnetelement (31) einander magnetisch abstoßen, um die Rotorwelle (10) zu tragen,
wobei das erste Magnetelement (29) und das zweite Magnetelement (31) jeweils mehrere Magnetringe (30, 32) aufweisen, **dadurch gekennzeichnet, dass** zwischen mindestens zwei Magnetringen (30, 32) des ersten Magnetelements (29) und/oder des zweiten Magnetelements (31) ein Federelement (39, 49) bereitgestellt ist,
wobei die Vakuumpumpe ferner ein axiales Einstellelement (37) zum Einstellen der Lagervorbelastung aufweist, wobei durch das Einstellelement (37) die axiale Position des ersten Magnetelements (29) oder des zweiten Magnetelements (31) eingestellt werden kann, wobei das Federelement (39, 49) zusammengedrückt oder entspannt wird, wenn die axiale Position eingestellt wird.

2. Vakuumpumpe nach Anspruch 1, **dadurch gekennzeichnet, dass** das zweite Lager (14) ein Wälzlager ist.

3. Vakuumpumpe nach Anspruch 1 oder 2, **dadurch gekennzeichnet, dass** das Federelement (39, 49) zwischen zwei Magnetringen (30) des ersten Magnetelements (29) angeordnet ist.

4. Vakuumpumpe nach einem der Ansprüche 1 bis 3, **dadurch gekennzeichnet, dass** mehr als ein Federelement (39, 49) bereitgestellt ist, insbesondere zwischen drei aufeinanderfolgenden Magnetringen (30) des ersten Magnetelements (29) und/oder des zweiten Magnetelements (31).

5. Vakuumpumpe nach Anspruch 4, **dadurch gekennzeichnet, dass** die Federelemente (39, 49) die gleiche Federkonstante aufweisen oder mindestens zwei Federelemente (39, 49) unterschiedliche Federkonstanten aufweisen.

6. Vakuumpumpe nach einem der Ansprüche 1-5, **dadurch gekennzeichnet, dass** das axiale Einstellelement (37) eine schraubenförmige Zuführung ist.

7. Vakuumpumpe nach einem der Ansprüche 1-6, **dadurch gekennzeichnet, dass** das axiale Einstellelement (37) auf das erste Magnetelement (28) wirkt.

## Revendications

1. Pompe à vide, en particulier une pompe à vide turbomoléculaire, avec un arbre de rotor (10) supporté dans un corps de pompe (16), ledit arbre supportant au moins un élément de rotor (18, 20),
deux roulements (12, 14), respectivement disposés entre un élément de siège de roulement (28, 52) relié au corps de pompe (16) et l'arbre de rotor (10),
dans laquelle au moins un roulement (12) possède un premier élément magnétique (29) relié à l'élément de siège de roulement (28), et un deuxième élément magnétique (31) relié à l'arbre de rotor (10), dans laquelle le premier élément magnétique (29) et le deuxième élément magnétique (31) se repoussent magnétiquement afin de supporter l'arbre de rotor (10),
dans laquelle le premier élément magnétique (29) et le deuxième élément magnétique (31) possèdent respectivement plusieurs bagues magnétiques (30, 32), **caractérisée en ce qu'**un élément à ressort (39, 49) est prévu entre au moins deux bagues magnétiques (30, 32) du premier élément magnétique (29) et/ou du deuxième élément magnétique (31),
dans laquelle la pompe à vide possède en outre un élément de réglage axial (37) destiné à régler la pré-tension du roulement, dans laquelle, à l'aide de l'élément de réglage (37), la position axiale du premier élément magnétique (29) ou du deuxième élément magnétique (31) peut être réglée, dans laquelle l'élément à ressort (39, 49) est comprimé ou déployé lorsque la position axiale est réglée.

2. Pompe à vide selon la revendication 1, **caractérisée en ce que** le deuxième roulement (14) est un palier à roulement.

3. Pompe à vide selon la revendication 1 ou 2, **caractérisée en ce que** l'élément à ressort (39, 49) est disposé entre les deux bagues magnétiques (30) du premier élément magnétique (29).

4. Pompe à vide selon l'une des revendications 1 à 3, **caractérisée en ce que** plusieurs un éléments à ressort (39, 49) sont prévus, en particulier entre trois bagues magnétiques consécutives (30) du premier élément magnétique (29) et/ou du deuxième élément magnétique (31).

5. Pompe à vide selon la revendication 4, **caractérisée en ce que** les éléments à ressort (39, 49) présentent la même constante de ressort ou au moins deux éléments à ressort (39, 49) présentent une constante de ressort différente.

6. Pompe à vide selon l'une des revendications 1 à 5, **caractérisée en ce que** l'élément de réglage axial (37) est un flux hélicoïdal.

7. Pompe à vide selon l'une des revendications 1 à 6, **caractérisée en ce que** l'élément de réglage axial (37) agit sur le premier élément magnétique (28).
